# EUROPEAN PATENT SPECIFICATION

(11) **EP 0 788 421 B1**
(45) Date of publication and mention of the grant of the patent: **06.02.2002**
(21) Application number: 95934753.5
(22) Date of filing: 27.10.1995
(51) Int. Cl.: B27B 9/02, B27G 19/04, B23D 59/00

(54) **A HAND-OPERATED POWER TOOL**
HANDBETÄTIGTES MOTORWERKZEUG
OUTIL A MOTEUR A COMMANDE MANUELLE

(30) Priority: 28.10.1994 GB 9421756; 18.11.1994 GB 9423334
(43) Date of publication of application: 13.08.1997
(73) Proprietor: EXAKT PRECISION TOOLS LIMITED, Aberdeen (GB)
(72) Inventor: Refson, Neil, Footdee, Aberdeen AB11 5DQ (GB)
(74) Representative: Kennedy, David Anthony
(86) International application number: GB9502528
(87) International publication number: WO9613362

(56) References cited:
- EP-A- 0 123 155
- WO-A-88/01557
- DE-A- 3 239 986
- DE-U- 9 308 674
- FR-A- 1 122 360
- US-A- 2 657 719
- US-A- 2 973 576
- US-A- 4 188 935
- US-A- 4 652 191

## Description

The invention relates to a hand-operated power tool, and especially, but not solely a circular saw.

A number of hand-operated circular saws are available which are operated by an electric motor. The most common type use circular saw blades greater than 125mm in diameter for cutting. This type is driven by an electric motor on the same axis as the axis of rotation of the blade. Normally there is a base plate or pressure plate, with adjustable height which is placed upon the workpiece. The cutting is done by a portion of the blade that protrudes below the base plate when the tool is manually displaced in the cutting direction. For correct operation this conventional circular saw requires to be held with two hands.

A more modern variation of the above tool uses an adjustable base plate which is sprung with respect to the main case and attached by a pivot point. This type of tool has the advantage that the base plate can be placed securely onto the workpiece before the blade starts to cut, giving improved control, also enabling cut-outs to be made.

However, problems are encountered with conventional circular saws when used on thin materials, small parts or for grooving are:
(i) The blade is offset to one edge of the tool and the tools are cumbersome with large base plates making accuracy, intricacy and manoeuvrability difficult.
(ii) Both hands are required to manoeuvre the tool into position and operate, which requires that in a lot of cases, the workpiece is clamped. This presents problems with small parts and can be time consuming.
(iii) The workpiece must be large enough and rigid enough to support the saw.

A similar tool is disclosed in German Patent Application No. 32 39 986 A1. This document discloses a tool which has a sprung base plate which is not pivoted but the tool does have an offset blade and requires the use of both hands to operate the tool.

Electrically operated jig saws are known. These are generally smaller and can be operated with one hand. The cutting is done by a thin blade that protrudes below a base plate which is placed onto the workpiece. However, these also have disadvantages of which the two main disadvantages are:
(i) Although excellent when making intricate cuts, they make slow, poor quality straight cuts.
(ii) As the blade must protrude significantly below the workpiece it cannot be fully supported causing vibration and clamping problems especially when cutting thin materials or small parts.

Sawing attachments are also available for connection to other types of tools, such as electric drills. However, sawing attachments which are operated by an electric drill or other form of drive, normally operate at a lower speed and higher torque than specialised tools, which results in reduced efficiency.

A wide variety of electric motor driven hand saws for model making exist. They have smaller motors and are of a simpler construction than the tools mentioned previously and are normally only suitable for cutting very thin materials.

In accordance with the present invention a hand-operated power tool suitable for use with one hand comprises a motor; a cutting element driven by the motor; a pressure plate adjacent the cutting element for engagement against a surface to be cut; a handle for the user within which the motor is located; a biasing device acting on the pressure plate to bias the pressure plate from a second position to a first position with respect to the motor and the cutting element, the pressure plate being movable from the first position to the second position against the action of the biasing device and at a constant angle with respect to the handle to allow a desired amount of the cutting element to be exposed below the pressure plate, the handle extending in a direction away from the pressure plate; characterised in that the longitudinal axis of the handle within which the motor is located is disposed at an acute angle to the engaging plane of the pressure plate.

Preferably the power tool is further characterised in that the plane of the cutting element is confined within the lateral extent of the handle.

Preferably the handle and a control switch for the motor are so positioned relative to each other as to enable the tool to be used with a single hand of a human operator.

Preferably the power tool is further characterised in that the pressure plate co-operates with a cutting element guard and a main case of the tool to surround the cutting element such that when no pressure is applied against said biasing force, the cutting element is fully enclosed.

Preferably the power tool also includes a depth stop adjustable by the user to limit the path of movement of the pressure plate with respect to the handle.

Preferably indicia are provided on a member which is stationary with respect to the cutting element, the indicia co-operating with the guard to indicate the depth of extension of the cutting element below the pressure plate.

Preferably the cutting element is a circular element, and indicia are provided on a member which is stationary with respect to the cutting element, the indicia co-operating with the guard to indicate the chord length of that part of the cutting element which is exposed below the pressure plate.

Preferably the exterior of the guard is provided with means indicating the plane of the cutting element.

Preferably the pressure plate moves relative to the handle on guides which are disposed in a plane defined by the centreline of the handle or symmetrically with respect to the centreline of the handle.

Preferably the cutting element is driven for cutting in a plane parallel to the longitudinal axis of the handle and within the lateral extent of the handle.

Preferably the power tool includes a guide attachment selectively mountable on the pressure plate, the guide attachment having an upper surface for abutment against the pressure plate and a lower surface in the form of a "V", the apex of the "V" forming a line which is transverse to the cutting direction of the tool for engagement with a pipe or other cylindrical body.

Preferably the cutting element is a circular saw blade.

Alternatively the cutting element may be an abrasive cutting disc.

Preferably, all aspects of the invention are combined into a hand-held electrically operated power tool, which is preferably a circular saw.

An example of a hand-operated power tool in accordance with the invention will now be described with reference to the accompanying drawings, in which:-
Figure 1 shows an external right side view of a circular saw;
Figure 2 shows an external front view of the circular saw;
Figure 3 shows a sectional right side view of the circular saw;
Figure 4 shows a sectional front view of the circular saw;
Figure 5 shows a side view of a left gearbox casing for the saw;
Figure 6 shows a front view of the left gearbox casing;
Figure 7 shows a front view of a right gearbox casing for the saw;
Figure 8 shows a side view of the right gearbox casing;
Figure 9 shows a sectional view of a driving gear for the saw;
Figure 10 shows a blade shaft with gear and bearings for the saw;
Figure 11 shows shim washers for the saw;
Figure 12 shows driven gear for the saw;
Figure 13 shows the blade or cutter shaft for the saw;
Figure 14 shows the blade or cutter retaining nut for the saw;
Figure 15 shows an internal side view of a left hand main case moulding for the saw;
Figure 16 shows an external front view of the left hand main case moulding;
Figure 17 shows an external front view of a right hand main case moulding for the saw;
Figure 18 shows an internal side view of the right hand main case moulding;
Figure 19 shows a side view of a right hand guard moulding for the saw;
Figure 20 shows a left guard moulding for the saw viewed from the front;
Figure 21 shows the right guard moulding viewed from the front;
Figure 22 shows a plan view of the left hand guard moulding;
Figure 23 shows a plan view of the right hand guard moulding;
Figure 24 shows a side view of a base plate for the saw;
Figure 25 shows a plan view of the base plate;
Figure 26 is a partial side view of the saw showing a guide attachment attached to the saw; and,
Figure 27 is a partial front view of the saw showing the guide attachment.

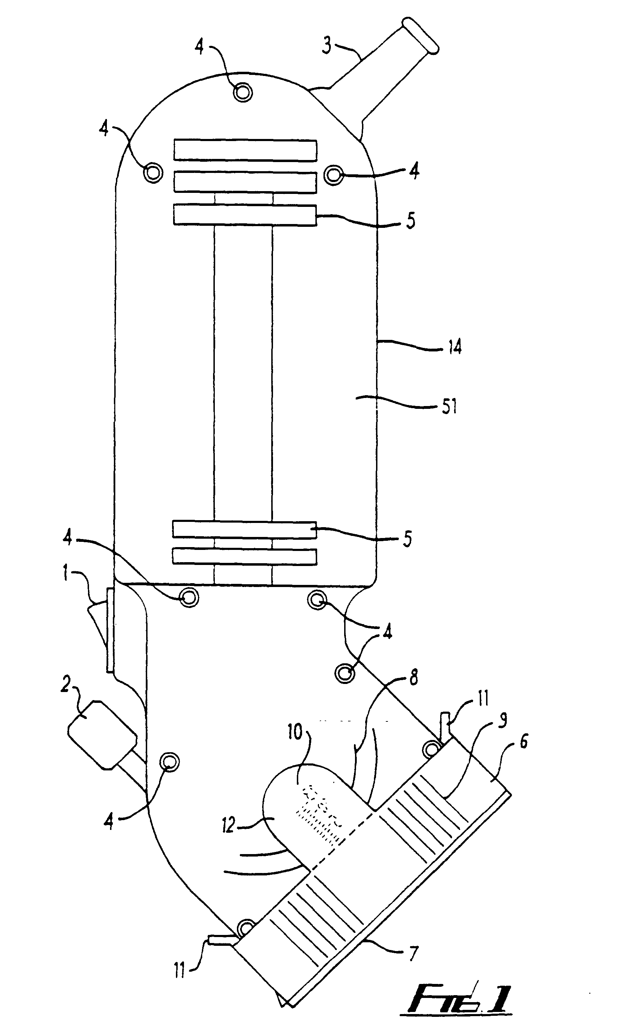

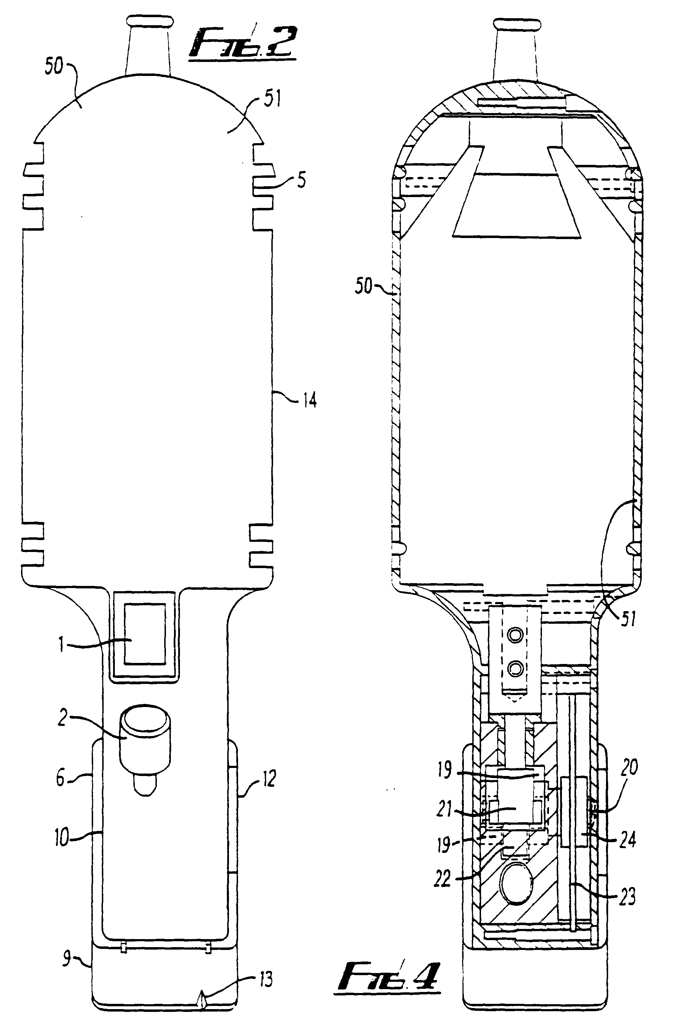

When the terms left or right are used throughout this description it is assumed that the tool is being viewed from the front as in figure 2. Some hidden detail has been omitted from certain drawings for clarity.

A hand-operated circular saw comprises a main case consisting of two plastic mouldings 50,51. Figures 15 and 16 show a left hand moulding 50. The moulding includes motor cooling vents 5 and hollow moulding extensions 36, through which fasteners for the case pass. Ridges 37 are used to mount the motor in position. Figures 18 and 19 show a right hand case 51. A hole 38 in the moulding 51 is used to assist in blade changing as described later.

Figure 1 shows an external right view of the circular saw. Figure 2 shows an external front view. Case fixing holes 4 are shown through which case fasteners pass. The case fastners may be machine screws or self tapping screws. A rubber grommet 3 is provided though which a power supply cable passes. The saw also includes a motor on/off switch 1, a cutting depth adjuster 2 and a base plate (or pressure plate) 7 that is held in contact with the workpiece when in use. A handle 14 formed by mouldings 50, 51 is angled backwards with respect to the base plate 7. This enables a user to apply downward pressure and forward pressure for feed while holding the saw by the handle 14.

A blade guard 6 encloses the saw blade (or cutting element) 23 so that the saw blade does not protrude from the main case when not in contact with the workpiece. The guard 6 is sprung with respect to the main case which is described later.

A depth scale 10 is shown dotted as it is actually marked on the main left hand main case moulding 50. As the guard 6 is depressed the top edge of the guard, shown dotted, moves up the scale until it reaches a point set by the depth adjuster 2. The actual depth of the blade 25 that has penetrated a workpiece can now be read from the scale 10.

Vertical lines 9 are marked on one side of the guard 6. Arcs 8 are marked on the main case. One arc 8 is provided for each size of blade or cutter 23 to be made available for the saw. Each arc 8 has the same radius and centre point as the corresponding blade 23. As the guard 6 is depressed the arcs will meet with one pair of vertical lines at a time, starting with the innermost lines. This provides indication of the front and rear intersection points of the blade or cutter 23 and a workpiece. This feature is particularly useful when making cut-outs as it allows the operator to see the length of cut.

Referring as well to figures 19 to 23. Figure 19 shows a right hand guard moulding 52. Figure 20 shows a front view of a left hand guard moulding 53. Figure 21 shows a front view of the right hand moulding 52. Figures 22 and 23 show plan views of the mouldings 53, 52 respectively. A tab 12 is provided on the moulding 52 which is used to cover the hole 38 in use. Hole 38 is necessary to allow access to blade shaft 20 and blade retaining nut 24. When mouldings 52, 53 are joined together, they form the guard 6. Tabs 11 are provided on the guard 6 and are pressed outwards to enable the guard 6 to be removed for blade changing. A pointer 13 is in line with the blade 23 enabling the user to follow a marking out line on a workpiece.

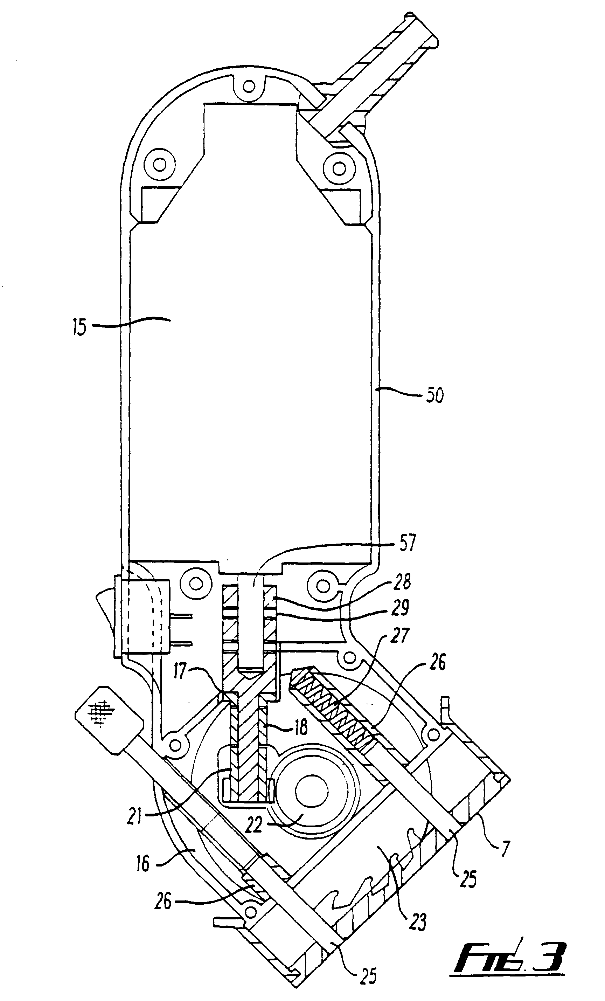

Figure 24 is a side view of the base plate 7. This part is made from steel. A groove 41 accepts a bottom ridge 54 of the guard mouldings 52, 53 for attachment. The edges of the base plate 7 are parallel to the blade or cutter 23 allowing the tool to be guided by a straight edge. Figure 25 shows a plan view of the base plate 7. A slot 39 is provided through which the blade 23 passes and holes 40 are provided into which guard guides 25 (see figure 3) are brazed or pressed. The guard guides 25 are made from ground steel and pass through phosphor bronze bearings 26. The plunge action of the guard is achieved by the use of a spring 27 which acts against the rearmost guard guide 25. The threaded depth adjuster 2 acts on the foremost guard guide 25.

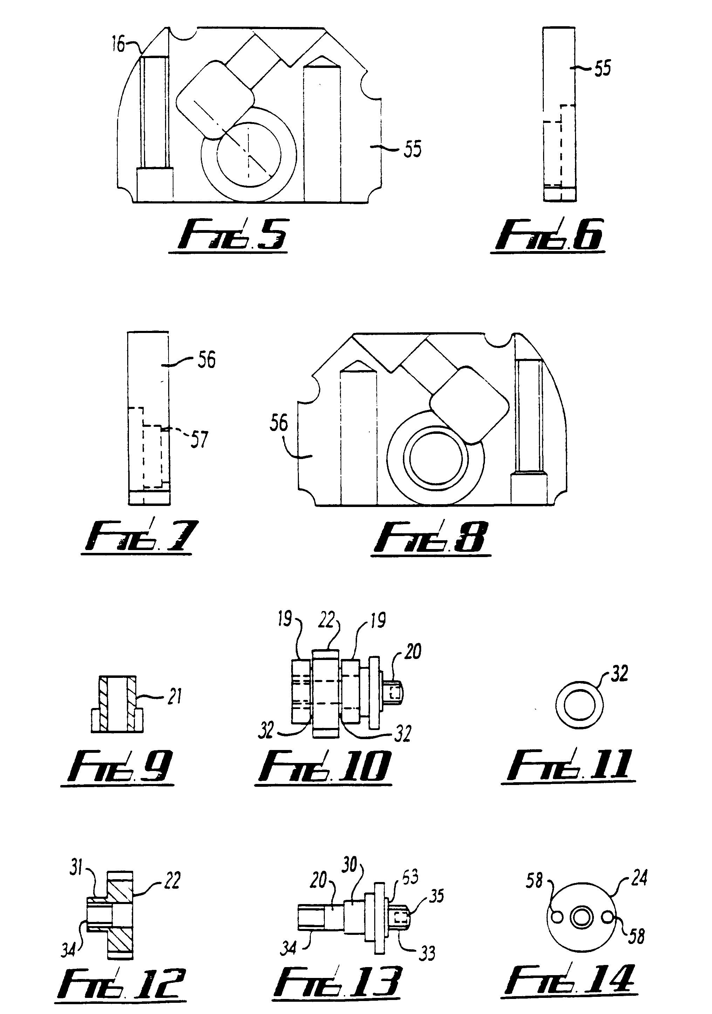

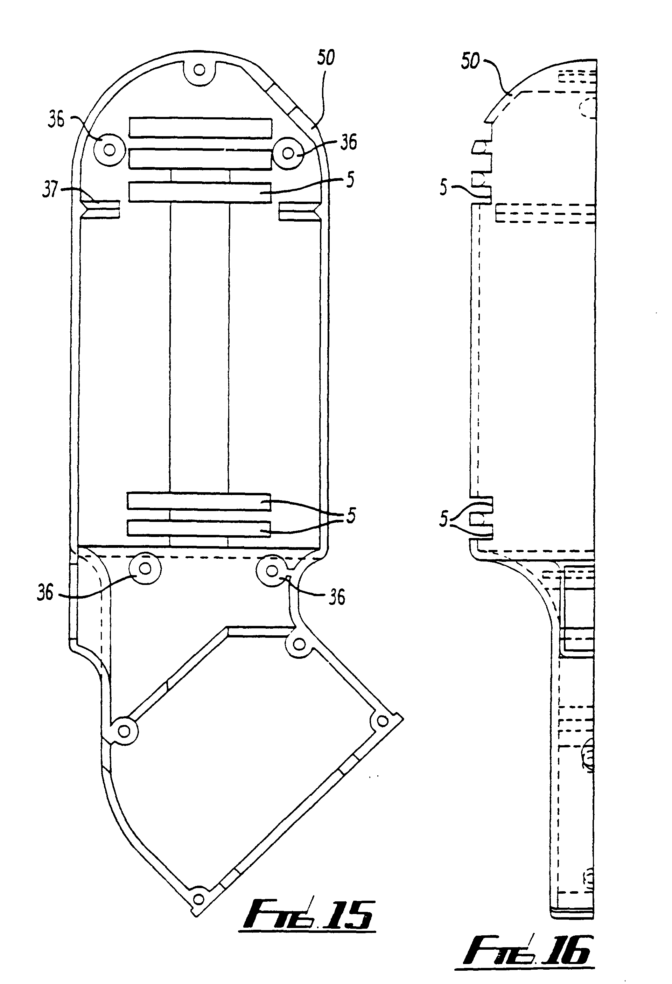

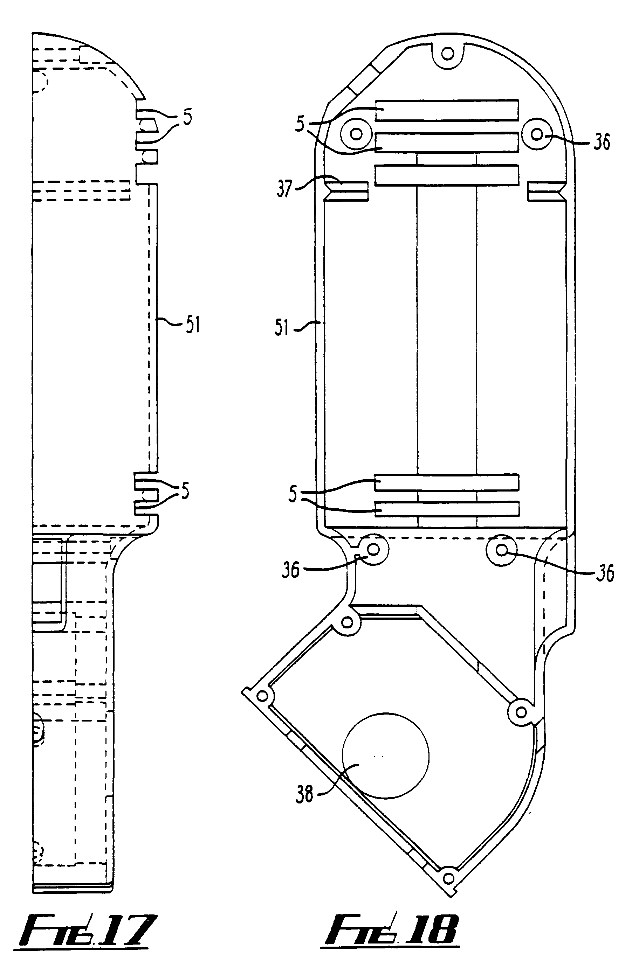

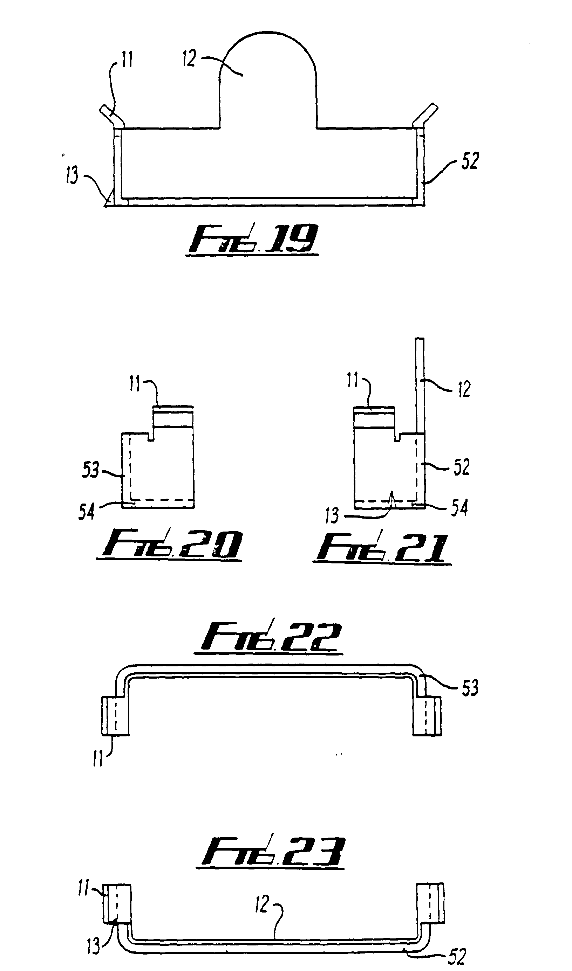

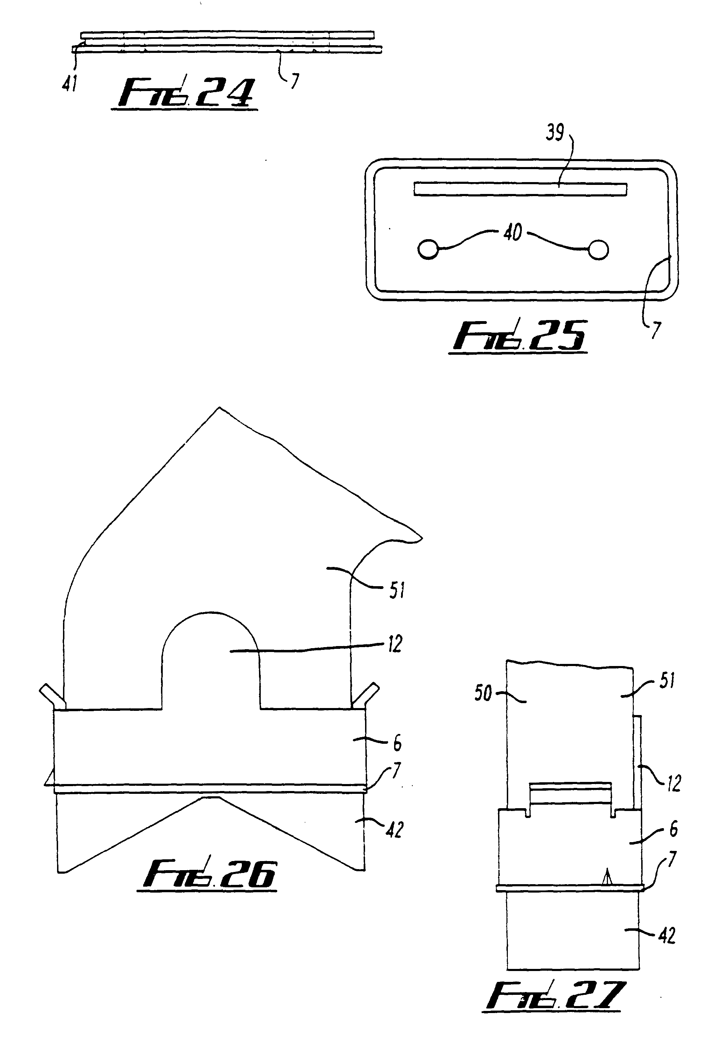

The bearings 26 are held in place inside a gearbox casing 16 which comprises two sections 55, 56. These can be seen in greater detail in figures 5 to 8. They are cast in aluminium alloy.

Referring back to figures 3 and 4. A 400W motor 15 is located inside the handle section 14 of the mouldings 50, 51. A shaft extension 28 is secured to a motor shaft 57 by set screws 29. A phosphor bronze thrust bearing 17 and a needle roller bearing 18 mount shaft extension 28 in the casing 16.

Attached to the end of shaft 28 is a cross axis helical driving gear 21 which drives a cross axis helical driven gear 22 with approximately twice the number of teeth as the gear 21. Figure 12 shows that half the bore of gear 22 is threaded, the thread is left hand to prevent loosening during operation. The other half of the bore is smooth and accurately machined so as to provide location onto driven shaft 20 (see figure 13). Surfaces 30, 31 support ball bearings 19. Two shim washers 32 space the ball bearings 19 from gear 22. Figure 10 shows the driven shaft 20 with the gear 22, bearing 19 and shim washers 32 assembled onto it. The outer surfaces of the bearing 19 locate into the gearbox casing 16. A ridge 57 on the right hand gearbox casing 56, figure 7, prevents axial movement of the shaft 20 in a right hand direction by preventing movement of fixed outer ring of the right hand bearing 19. Axial movement in the left direction is prevented by the outer case.

A locating surface 63 is provided on the shaft 20 for locating the saw blade or cutter 23. The blade retaining nut 24 is attached to the driven shaft 20 via a left hand thread.

The blade 23 is changed by removing the guard 6, as described earlier, and inserting a purpose made spanner into two small holes 58 in the retaining nut 24 (see Figure 14). A key is then inserted through a hole in the spanner into a hexagon or splined indentation 35 in the end of shaft 20, to lock shaft 20. By turning the key in the opposite direction to the spanner the retaining nut can be removed and the blade replaced through a slot in the bottom of the right hand case moulding 51.

In figures 3 and 4 it can be seen that blade 23 is enclosed in a compartment sided by internal webs of the outer case mouldings 50, 51 and by the right gearbox casing 56. This helps to prevent dust entering the motor 15.

The blade 23 would not normally be shown in such sectional drawing such as figure 3. However, it has been included to permit easier interpretation of the drawing.

The saw blade or cutting disk 23 rotates in the counter run direction to the feed direction in order to pull the workpiece into the base when cutting, as is standard practice with electrically operated circular saws.

An alternative arrangement could have a motor with a shaft in line with the blade shaft and offset, driven by gears or belt and with a separate handle at the same angle as in the example previously described. The guard, blade indication and plunge action would remain identical.

The driving motor could be in a separate casing allowing it to be detached and used for driving other tools.

It would also be possible to provide for attachment of "V" shaped block 42 (see Figures 26 and 27) to the bottom of the base plate 7. This would permit the saw to be more easily used for cutting circular or polygonal cross-sectional objects.

Advantages of the invention over existing hand held circular saws are:

Increased accuracy, intricacy, and manoeuvrability when cutting thin or flexible materials, grooving or making cut-outs. This allows materials normally beyond the scope of such tools to be cut e.g. small parts, veneers, sheet metals, sheet plastics.

As one hand is free to hold the workpiece less clamping is required.

Safety is improved due to the small enclosed blade.

Some advantages over existing hand held jig saws are:

Increased speed and efficiency with an improved finish.

The workpiece can be fully supported allowing materials normally beyond the scope of such tools to be cut e.g. small parts, veneers, thin sheet metals and plastic.

The ability to cut grooves.

Safety is improved.

Some advantages over existing model making tools are:

Increased power allowing thicker and tougher materials to be cut, speed of cutting to be increased.

More control and ease of use.

The main features which bring about these improvements are:

One hand operation.

The small size incorporating a motor with power usually reserved for larger tools.

The size, shape and angle of the handle.

The small size of the base plate.

The sides of the base plate are parallel and close to the blade allowing a hand held guide to be followed.

The plunge action that does not effect the angle of the handle.

The blade when viewed on edge, as in figure 2, is close to the centre line of the tool.

An additional advantage is that a vee-block 42 may be mounted to the base plate as an accessory for cutting tubes.

## Claims

1. A hand-operated power tool suitable for use with one hand comprising a motor; a cutting element (23) driven by the motor; a pressure plate (7) adjacent the cutting element for engagement against a surface to be cut; a handle (14) for the user within which the motor is located; a biasing device (27) acting on the pressure plate to bias the pressure plate from a second position to a first position with respect to the motor and the cutting element, the pressure plate being movable from the first position to the second position against the action of the biasing device and at a constant angle with respect to the handle to allow a desired amount of the cutting element to be exposed below the pressure plate, the handle extending in a direction away from the pressure plate; **characterised in that** the longitudinal axis of the handle (14) within which the motor is located is disposed at an acute angle to the engaging plane of the pressure plate (7).

2. A hand-operated power tool as claimed in Claim 1, further **characterised in that** the plane of the cutting element (23) is confined within the lateral extent of the handle (14).

3. A power tool according to Claims 1 and 2, wherein the handle (14) and a control switch (1) for the motor are so positioned relative to each other as to enable the tool to be used with a single hand of a human operator.

4. A hand-operated power tool as claimed in Claims 1, 2 or 3 further **characterised in that** the pressure plate (7) co-operates with a cutting element guard and a main case of the tool to surround the cutting element (23) such that when no pressure is applied against said biasing force, the cutting element is fully enclosed.

5. A power tool according to any of Claims 1 to 4, including a depth stop adjustable by the user to limit the path of movement of the pressure plate with respect to the handle.

6. A power tool according to Claim 4 or 5, in which indicia are provided on a member which is stationary with respect to the cutting element, the indicia co-operating with the guard to indicate the depth of extension of the cutting element below the pressure plate.

7. A power tool according to any one of Claims 4 to 6, in which the cutting element is a circular element, and in which indicia are provided on a member which is stationary with respect to the cutting element, the indicia co-operating with the guard to indicate the chord length of that part of the cutting element which is exposed below the pressure plate.

8. A power tool according to any of Claims 4 to 7, in which the exterior of the guard is provided with means indicating the plane of the cutting element.

9. A power tool according to any of the preceding Claims, in which the pressure plate moves relative to the handle on guides which are disposed in a plane defined by the centreline of the handle or symmetrically with respect to the centreline of the handle.

10. A power tool according to any of the preceding Claims, wherein the cutting element is driven for cutting in a plane parallel to the longitudinal axis of the handle and within the lateral extent of the handle.

11. A power tool according to any of the preceding Claims, including a guide attachment selectively mountable on the pressure plate, the guide attachment having an upper surface for abutment against the pressure plate and a lower surface in the form of a "V", the apex of the "V" forming a line which is transverse to the cutting direction of the tool for engagement with a pipe or other cylindrical body.

12. A power tool according to any of the preceding Claims, in which the cutting element is a circular saw blade.

13. A power tool according to any of Claims 1 to 12, in which the cutting element is an abrasive cutting disc.

## Patentansprüche

1. Handbetätigtes Elektrowerkzeug zur Bedienung mit einer Hand, bestehend aus einem Motor, einem von dem Motor angetriebenen Schneidelement (23), einer Druckplatte (7) neben dem Schneidelement zum Anlegen an die zu schneidende Fläche, einem Griff (14) für den Benutzer, in welchem sich der Motor befindet, einer auf die Druckplatte wirkenden Vorspanneinrichtung (27) um dieselbe in Bezug auf den Motor und das Schneidelement aus einer zweiten Stellung in eine erste Stellung zu bringen, wobei diese Druckplatte gegen die Wirkung der Vorspanneinrichtung und in einem konstanten Winkel zum Griff aus der ersten Stellung in die zweite Stellung bewegt werden kann, um einen gewünschten Teil des Schneidelements unter der Druckplatte freizugeben, und wobei der Griff in einer Richtung von der Druckplatte weg verläuft, **dadurch gekennzeichnet, dass** die Längsachse des Griffs (14), in dem sich der Motor befindet, in einem spitzen Winkel zur Auflagefläche der Druckplatte (7) verläuft.

2. Handbetätigtes Elektrowerkzeug nach Anspruch 1, des Weiteren **dadurch gekennzeichnet, dass** die Ebene des
Schneidelements (23) innerhalb der seitlichen Ausdehnung des Griffs (14) begrenzt ist.

3. Handbetätigtes Elektrowerkzeug nach Anspruch 1 und 2, **dadurch gekennzeichnet, dass** der Griff (14) und ein Betätigungsschalter (1) für den Motor so zueinander angeordnet sind, dass das Werkzeug von der Bedienperson mit nur einer Hand benutzt werden kann.

4. Handbetätigtes Elektrowerkzeug nach Anspruch 1, 2 oder 3, des Weiteren **dadurch gekennzeichnet, dass** die Druckplatte (7) mit einer Schneidelement-Schutzvorrichtung und einem Hauptgehäuse des Werkzeugs zusammenwirkt, um das Schneidelement (23) derart zu umgeben, dass dasselbe, solange kein Druck gegen besagte Vorspannkraft ausgewirkt wird, voll umschlossen ist.

5. Elektrowerkzeug nach einem der Ansprüche 1 bis 4, **dadurch gekennzeichnet, dass** es einen vom Benutzer verstellbaren Tiefenanschlag umfasst, um den Weg der Druckplatte in Bezug auf den Handgriff zu begrenzen.

6. Elektrowerkzeug nach Anspruch 4 oder 5, **dadurch gekennzeichnet, dass** Markierungen an einem in Bezug auf das Schneidelement stationären Element vorgesehen sind, welche im Zusammenwirken mit der Schutzvorrichtung die Ausfahrtiefe des Schneidelements unterhalb der Druckplatte angeben.

7. Elektrowerkzeug nach einem der Ansprüche 4 bis 6, **dadurch gekennzeichnet, dass** das Schneidelement kreisförmig ist, und bei welchem die Markierungen an einem in Bezug auf das Schneidelement unbeweglichen Element vorgesehen sind, wobei besagte Markierungen in Zusammenwirkung mit der Schutzvorrichtung die Sehnenlänge des unterhalb der Druckplatte freiliegenden Teils des Schneidelementes anzeigen.

8. Elektrowerkzeug nach einem der Ansprüche 4 bis 7, **dadurch gekennzeichnet, dass** das Äußere der Schutzvorrichtung mit einem Mittel zum Anzeigen der Ebene des Schneidelements ausgestattet ist.

9. Elektrowerkzeug nach einem der vorangehenden Ansprüche, **dadurch gekennzeichnet, dass** die Druckplatte auf Führungen relativ zum Griff beweglich ist, wobei diese in einer Ebene angeordnet sind, welche durch die Mittelachse des Griffs oder symmetrisch zur Mittelachse des Griffs verläuft.

10. Elektrowerkzeug nach einem der vorangehenden Ansprüche, **dadurch gekennzeichnet, dass** das Schneidelement zum Schneiden in einer Ebene angetrieben wird, welche parallel zur Längsachse des Griffs und innerhalb der seitlichen Ausdehnung des Griffs verläuft.

11. Elektrowerkzeug nach einem der vorangehenden Ansprüche, **dadurch gekennzeichnet, dass** es ein wahlweise an der Druckplatte montierbares Führungszubehör umfasst, welches eine Oberseite zum Anlegen an die Druckplatte und eine "V"-förmige Unterseite hat, wobei die Spitze des "V" eine Linie quer zur Schneidrichtung des Werkzeugs bildet zum Halten eines Rohrs oder eines anderen zylindrischen Körpers.

12. Elektrowerkzeug nach einem der vorangehenden Ansprüche, **dadurch gekennzeichnet, dass** das Schneidelement ein Kreissägeblatt ist.

13. Elektrowerkzeug nach einem der Ansprüche 1 bis 12, bei welchem das Schneidelement eine Trennschleifscheibe ist.

## Revendications

1. Outil à moteur actionné à la main convenant à un usage avec une seule main; comprenant un moteur; un élément de coupe (23) entraîné par le moteur; une plaque de pression (7) adjacente à l'élément de coupe pour s'appuyer contre une surface à couper; une manette (14) pour l'utilisateur dans laquelle le moteur est situé; un dispositif de sollicitation (27) agissant sur la plaque de pression pour solliciter la plaque de pression d'une seconde position à une première position par rapport au moteur et à l'élément de coupe; la plaque de pression pouvant se déplacer de la première position à la seconde position à l'encontre de l'action du dispositif de sollicitation et sous un angle constant par rapport à la manette pour permettre d'exposer une quantité souhaitée de l'élément de coupe en dessous de la plaque de pression, la manette s'étendant dans une direction opposée à la plaque de pression; **caractérisé en ce que** l'axe longitudinal de la manette (14) dans laquelle le moteur est situé fait un angle aigu par rapport au plan d'engagement de la plaque de pression (7).

2. Outil à moteur actionné à la main selon la revendication 1, **caractérisé en outre en ce que** le plan de l'élément de coupe (23) est confiné dans la dimension latérale de la manette (14).

3. Outil à moteur selon les revendications 1 et 2, dans lequel la manette (14) et un commutateur de commande (1) pour le moteur sont disposés l'un par rapport à l'autre de manière à permettre d'utiliser l'outil avec une seule main d'un opérateur humain.

4. Outil à moteur actionné à la main selon l'une quelconque des revendications 1, 2 ou 3, **caractérisé en outre en ce que** la plaque de pression (7) coopère avec un protège-élément de coupe et une caisse principale de l'outil pour entourer l'élément de coupe (23) de telle sorte que, lorsqu'aucune pression n'est appliqué à l'encontre de ladite force de sollicitation, l'élément de coupe soit entièrement enfermé.

5. Outil à moteur selon l'une quelconque des revendications 1 à 4, comprenant un arrêt de profondeur ajustable par l'utilisateur pour limiter le trajet de déplacement de la plaque de pression par rapport à la manette.

6. Outil à moteur selon la revendication 4 ou 5, dans lequel des index sont ménagés sur un élément qui est stationnaire par rapport à l'élément de coupe, les index coopérant avec la protection pour indiquer la profondeur d'extension de l'élément de coupe en dessous de la plaque de pression.

7. Outil à moteur selon l'une quelconque des revendications 4 à 6, dans lequel l'élément de coupe est un élément circulaire et dans lequel des index sont ménagés sur un élément qui est stationnaire par rapport à l'élément de coupe, les index coopérant avec la protection pour indiquer la longueur de corde de cette partie de l'élément de coupe qui est exposée en dessous de la plaque de pression.

8. Outil à moteur selon l'une quelconque des revendications 4 à 7, dans lequel l'extérieur de la protection est pourvue de moyens indiquant le plan de l'élément de coupe.

9. Outil à moteur selon l'une quelconque des revendications précédentes, dans lequel la plaque de pression se déplace par rapport à la manette sur des guides qui sont disposés dans un plan défini par l'axe central de la manette ou symétriquement par rapport à l'axe central de la manette.

10. Outil à moteur selon l'une quelconque des revendications précédentes, dans lequel l'élément de coupe est entraîné pour une découpe dans un plan parallèle à l'axe longitudinal de la manette et dans la dimension latérale de celle-ci.

11. Outil à moteur selon l'une quelconque des revendications précédentes, comprenant un fixe-guide qui peut être monté sélectivement sur la plaque de pression, le fixe-guide ayant une surface supérieure qui peut s'abouter contre la plaque de pression et une surface inférieure sous la forme d'un "V", le sommet du "V" formant une ligne qui est transversale à la direction de coupe de l'outil pour un engagement sur un tube ou un autre corps cylindrique.

12. Outil à moteur selon l'une quelconque des revendications précédentes, dans lequel l'élément de coupe est une lame de scie circulaire.

13. Outil à moteur selon l'une quelconque des revendications 1 à 12, dans lequel l'élément de coupe est un disque de coupe abrasif.
